# EUROPÄISCHE PATENTSCHRIFT

(11) **EP 0 717 135 B1**
(45) Veröffentlichungstag und Bekanntmachung des Hinweises auf die Patenterteilung: **16.06.2010**
(21) Anmeldenummer: 95810359.0
(22) Anmeldetag: 31.05.1995
(51) Int. Cl.: D03D 49/04, G01L 5/10

(54) **Vorrichtung zur Messung der Kettspannung an einer Webmaschine**
Device for measuring warp tension on a loom
Dispositif de mesure de la tension de chaîne sur un métier à tisser

(30) Priorität: 13.12.1994 EP 94810722
(43) Veröffentlichungstag der Anmeldung: 19.06.1996
(73) Patentinhaber: ITEMA (Switzerland) Ltd., 8620 Wetzikon (CH)
(72) Erfinder: De Jager, Godert, Dr., CH-8121 Benglen (CH); Gacsay, Lorant, CH-8053 Zürich (CH)
(74) Vertreter: Faggioni, Carlo Maria

(56) Entgegenhaltungen:
- EP-A- 0 151 940
- EP-A- 0 385 061
- EP-A- 0 407 824
- EP-A- 0 595 072
- EP-A- 0 686 838
- CH-A- 556 416

## Beschreibung

Die Erfindung betrifft eine Vorrichtung zur Messung der Kettspannung gemäss dem Oberbegriff des Anspruches 1 sowie eine Webmaschine mit einer solchen Vorrichtung.

Aus der CH-B 556 416 ist eine am Brustbaum vorgesehene Vorrichtung zur Messung der Kettspannung bekannt, die durch das laufende Gewebe mit einer Kraft beaufschlagt wird.

Im Dokument EP 0 151 940 A ist eine Vorrichtung zur Messung der Kettspannung beschrieben bestehend aus einer Umlenkrolle, welche über eine Feder mit einem Kraftaufnehmer gekoppelt ist.

Im Dokument EP 0 686 838 A ist eine Vorrichtung zum Messen der Fadenspannung offenbart, welche aus einem Signalgeber, einem Fadenführungsorgan und einer elastischen Schicht besteht, die zwischen Signalgeber und Fadenführungsorgan angeordnet und mit diesen verbunden ist. Durch die freiliegende Anordnung der Schicht und des Fadenorgans wird eine nahezu hysteresefreie Funktion erreicht.

In der EP-A 0 385 061 ist eine Messeinrichtung beschrieben, die ein Rohr mit einer radial verlaufenden Nut, einen Messbalken, der in der Nut angeordnet ist, einen Träger, der unterhalb des Messbalkens angeordnet und im Rohr befestigt ist und zwei Messwertgeber zur Messung der zur Kettfadenspannung proportionalen Gewebespannung enthält.

Bei dieser Messeinrichtung sind die Dehnungsmessstreifen auf den Träger und den Messbalken verbindende Organen angebracht und geben ein Signal ab, welches der Durchbiegung der Organe entspricht. Die Dehnungsmessstreifen sind Schwingungen unterworfen, die von den über den Messbalken laufenden Kettfäden oder von der Webmaschine verursacht werden. Derartige sich überlagernde Schwingungen können durch schaltungstechnische Massnahmen nicht beseitigt werden und verfälschen daher das Messergebnis beträchtlich, d.h. eine dynamische Kettspannungsmessung ist nicht durchführbar.

Bei einer anderen Ausführungsform werden Druckaufnehmer verwendet, die zwischen der Unterseite des Messbalkens und der zugeordneten Oberseite des Trägers angeordnet sind, so dass der Messbalken frei auf den Druckaufnehmern aufliegt.

Bei dieser Ausführungsform treten ebenfalls Schwingungen auf und zudem beim Laufwechsel des Gewebes eine Kippbewegung des Messbalkens innerhalb der Ausnehmung auf, was eine ungleichmässige Kraftverteilung zu Folge hat. Ferner ist die Einbaulage auf eine lotrechte Anordnung des Messbalkens eingeschränkt.

Hier will die Erfindung Abhilfe schaffen. Die Erfindung, wie sie in den Ansprüchen gekennzeichnet ist, löst die Aufgabe eine Vorrichtung zur Messung der Kettspannung zu schaffen, bei der durch eine verbesserte Krafteinleitung die Kettspannung mit hoher Genauigkeit gemessen wird.

Neben der Haltefunktion erfüllt das elastische Element in besonders vorteilhafter Weise eine Zentrierfunktion, so dass die Kettfadenspannung völlig unabhängig vom Umschlingungswinkel gemessen wird und eine Dichtungsfunktion, welche den Kraftaufnehmer gegen Verschmutzung durch Faserflug abschirmt. Da zudem das Organ über das elastische Mittel auf dem Kraftaufnehmer abgestützt ist, wird einerseits die Kraftübertragung in vorteilhafter Weise verbessert, geringe Kraftänderungen und die mechanischen Schwingungen werden kompensiert, so dass die Vorrichtung insbesondere als Istwertgeber für eine positive (aktive) Kettspannungsregelung geeignet ist.

Es ist von Vorteil, wenn die Kraftmesseinrichtung ein einzelner Kraftaufnehmer ist, weil bedingt durch die elastische Anordnung des Organs die Messung der gesamten Reaktionskraft möglich ist.

Im folgenden wird die Erfindung anhand der beiliegenden Zeichnungen erläutert.

Es zeigen:
- Fig. 1: einen Querschnitt einer ersten Ausführungsform einer erfindungsgemässen Vorrichtung;
- Fig. 2: einen Abschnitt der in Fig. 1 dargestellten erfindungsgemässen Vorrichtung in räumlicher Darstellung;
- Fig. 3: eine räumliche Darstellung einer ersten Ausführungsform eines erfindungsgemässen Organs;
- Fig. 4: eine schematische Darstellung zur Erläuterung der Wirkung des ersten elastischen Elementes;
- Fig. 5: eine schematisch dargestellten Verlauf einer Webkette und des Gewebes in einer Webmaschine;
- Fig. 6: eine erfindungsgemässe Anordnung der Vorrichtung gemäss Fig. 1 in räumlicher Darstellung;
- Fig. 7: eine zweite Ausführungsform einer erfindungsgemässen Vorrichtung;
- Fig. 8: einen Schnitt entlang der Linie VIII-VIII in Fig. 7;
- Fig. 9: eine zweite erfindungsgemässe Anordnung der Vorrichtung gemäss Fig. 1 im Schnitt;
- Fig. 10: eine dritte Ausführungsform einer erfindungsgemässen Vorrichtung;
- Fig. 11: eine Einzelheit A in Fig. 10 im Schnitt;
- Fig. 12: eine vierte Ausführungsform einer erfindungsgemässen Vorrichtung;
- Fig. 13: eine fünfte Ausführungsform einer erfindungsgemässen Vorrichtung und
- Fig. 14: eine sechste Ausführungsform einer erfindungsgemässen Vorrichtung.

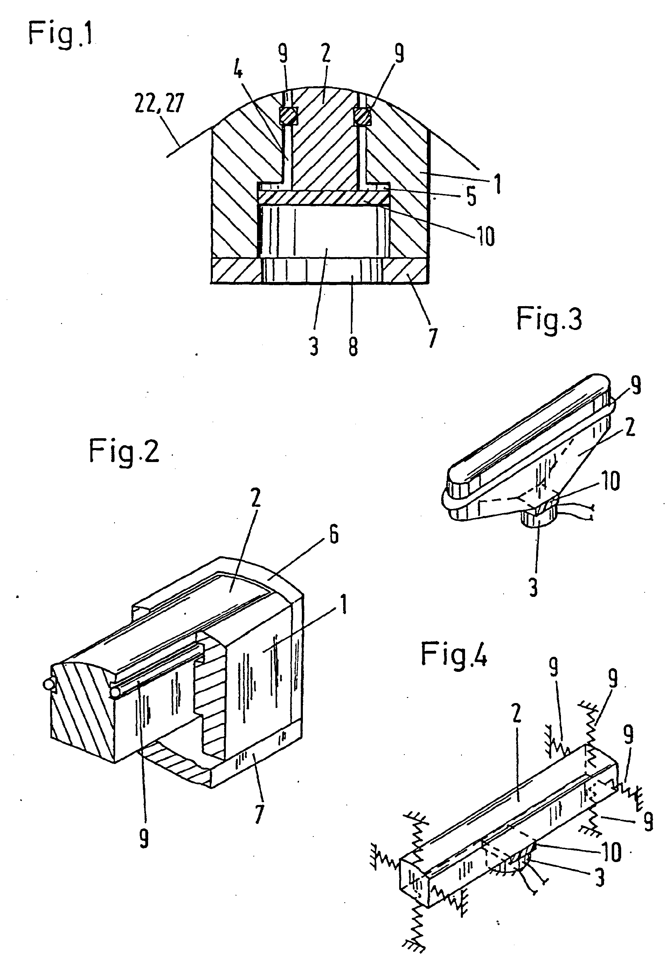

Wie die Figuren 1 und 2 zeigen besteht die Vorrichtung im wesentlichen aus einem länglichen Aufnahmeteil 1, einem länglichen Organ 2 und einem Kraftaufnehmer 3. Es wird darauf hingewiesen, dass zwei oder mehrere Kraftaufnehmer 3 verwendet werden können, die in gleichmäsigen Abständen angordnet werden.

Der Aufnahmeteil 1 hat eine Ausnehmung, die sich in Längsrichtung erstreckt. Diese Ausnehmung hat einen ersten Abschnitt 4 in welchem das Organ 2 gehalten ist und einen zweiten Abschnitt 5 in welchen der Kraftaufnehmer 3 angeordnet ist. Ferner ist eine Platte 6 vorgesehen, welche die Ausnehmung an einer Stirnseite des Aufnahmeteiles 1 abschliesst. Der Kraftaufnehmer 3 ist auf einer Grundplatte 7 angeordnet, die zum Beispiel ein Loch 8 zur Durchführung der Anschlussleitungen (nicht dargestellt) des Kaftaufnehmers 3 aufweist und am Aufnahmeteil 1 befestigt ist. Dadurch wird die Ausnehmung an der Unterseite abgeschlossen.

In den Seitenflächen des ersten Abschnittes 4 der Ausnehmung und des Organs 2 sind Nuten ausgebildet, die sich in Längsrichtung erstrecken. Das Organ 2 ist einerseits durch ein elastisches Element 9 im ersten Abschnitt 4 der Ausnehmung gehalten und andererseits über eine Platte 10 aus elastischem Material auf den Kraftaufnehmer 3 abgestützt.

Das elastische Element 9 ist eine Gummischnur, die in den Nuten eingelegt ist und das Organ 2 an zum Beispiel drei Seiten umschliesst. Anstelle der Schnur kann auch ein Gummiring verwendet werden, der das Organ 2 allseitig umschliesst (Fig. 3).

Wie aus Figur 1 ersichtlich ist, zentriert die Gummischnur 9 das Organ 2 innerhalb der Ausnehmung 4 und dichtet den Spalt zwischen Ausnehmung und Organ gegen Fasereinschluss ab. Aus der Fig. 4 ist die Funktion der Gummischnur 9 ersichtlich. Aufgrund der in Abhängigkeit vom Querschnitt des Organs 2 bestimmten Gummischnur, wird eine allseitig gerichtete federelastische Abstützung erzielt, sodass bei dieser Anordnung der Kraftaufnehmer einfach und präzise zugordnet werden kann. Anstelle der Platte 10 kann eine Schicht aus elastischem Material auf den Kraftaufnehmer aufgebracht werden.

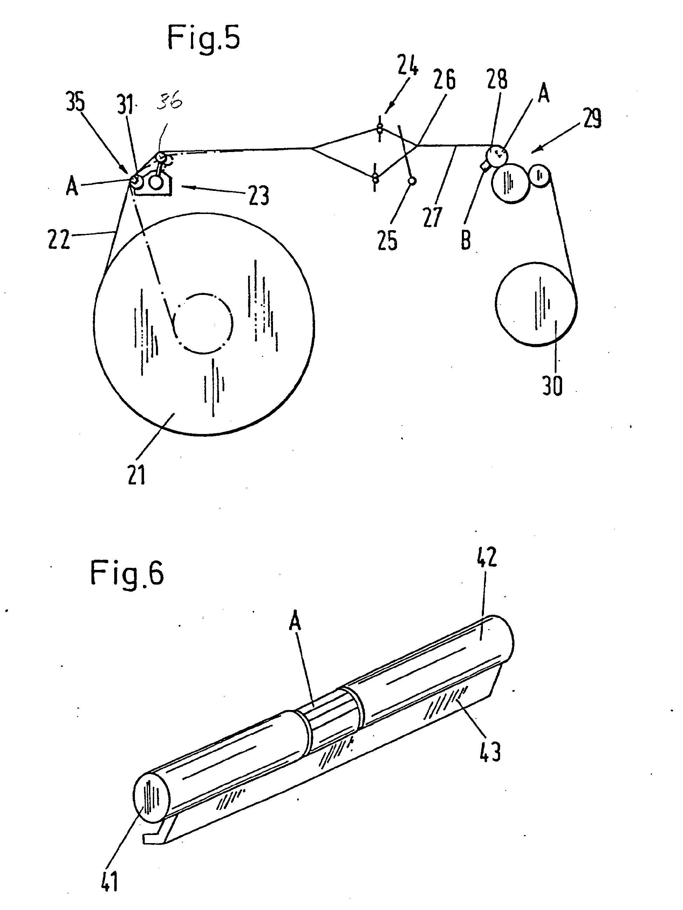

Die vorstehend beschriebenen Ausführungsform der Messvorrichtung A kann im Verlauf der Kette und/oder des Gewebes angeordnet werden. Wie Fig. 5 zeigt, laufen die von einem durch eine Kettablasseinrichtung gesteuerten Kettbaum 21 abgewickelten Kettfäden 22 über einen Webkettenspanner 23 zu einer Mehrzahl von Weblitzen 24 und durch ein Webblatt 25 bis zum Bindepunkt 26. Nach dem Bindepunkt läuft das Gewebe 27 über einen Brustbaum 28, eine Warenabzugseinrichtung 29 zu einem Warenbaum 30, wo das Gewebe aufgewickelt wird.

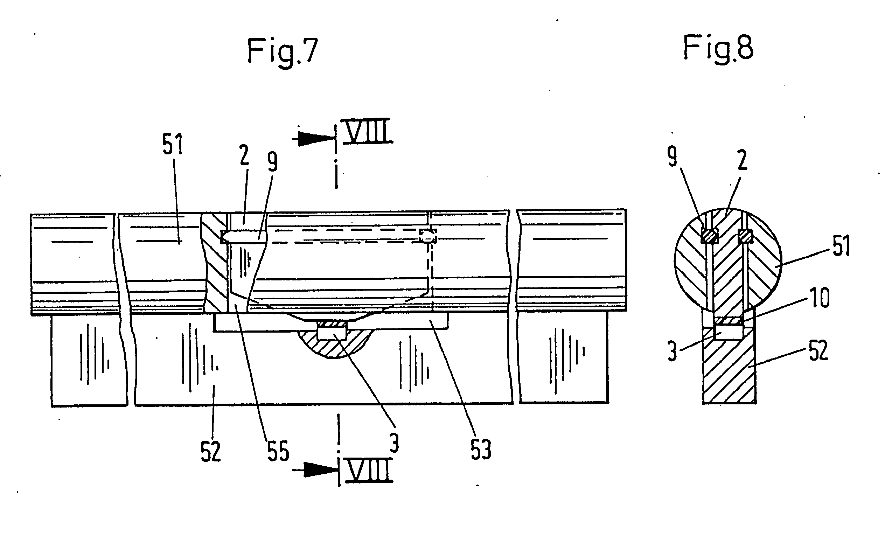

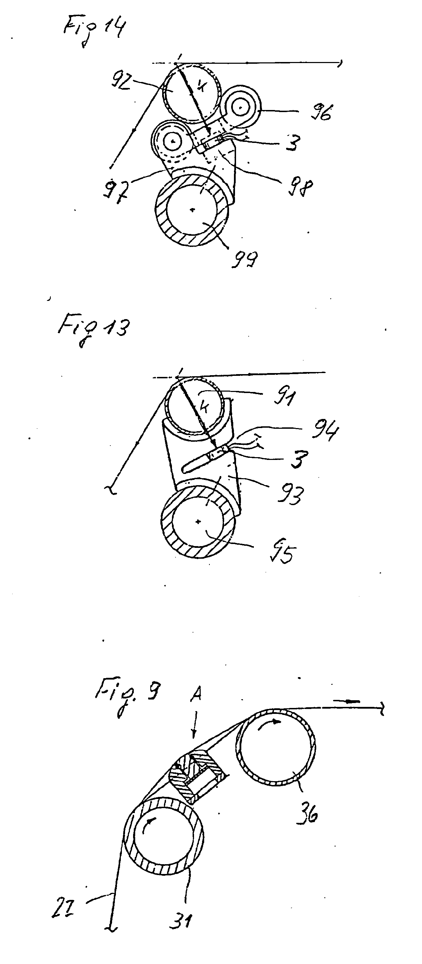

Die Ausführungsform der Messvorrichtung gemäss Fig. 2 bzw. 3 eignet sich für eine direkte Messung an einer Webkette bzw. einem Gewebe. Hieraus ergeben sich verschiedene Stellen im Verlauf der Webkette und/oder dem Gewebe zur Verwendung der Messvorrichtung. Im Verlauf der Webkette 22 kann die Messvorrichtung im Umlenkungsbereich 35 des Umlenkbaumes 31, d.h. mit Vorteil unmittelbar in einer Ausnehmung im Umlenkbaum 31 (Fig. 7) oder zwischen Umlenkbaum 35 und Spannbaum 36 (Fig. 9) angeordnet werden. Im Verlauf des Gewebes 27 kann die Messvorrichtung im Bereich des Brustbaumes 28 angeordnet werden. Ein Ausführungsbeispiel ist in Fig. 6 dargestellt. Hierbei besteht der Brustbaum aus zwei Abschnitten 41, 42, die im Abstand zueinander an einem Halter 43 befestigt sind und die Messvorrichtung ist zwischen den Abschnitten angeordnet und an dem Halter 43 befestigt. Es wird darauf hingewiesen, dass bei Teilkettbäumen für jeden Teilkettbaum eine Messvorrichtung, wie vorstehend beschrieben in dem Brustbaum vorgesehen ist.

Die Figuren 7 und 8 zeigen eine andere Ausführungsform einer erfindungsgemässen Messvorrichtung B, wobei ein Teil der Vorrichtung im Brustbaum angeordnet ist. Der Brustbaum 51 ist an einem Halter 52 montiert, der im Bereich unterhalb des Brustbaumes eine Ausnehmung 53 aufweist.

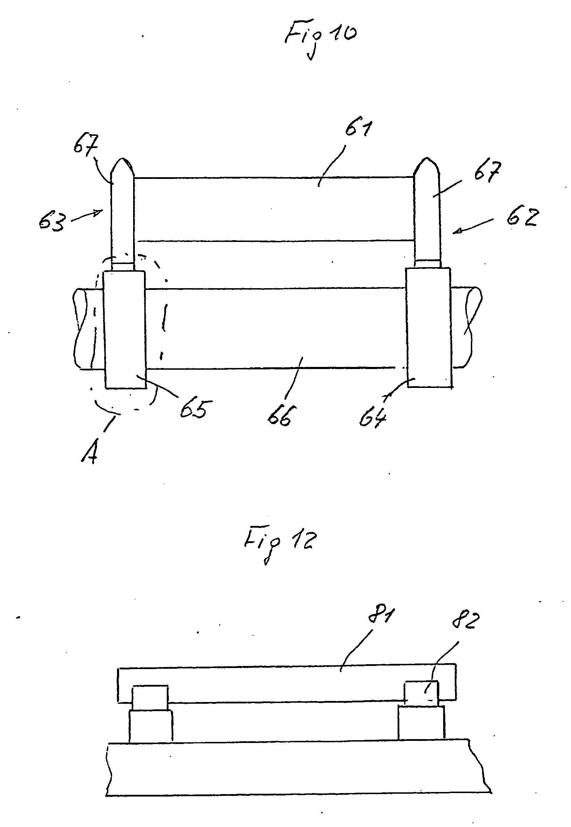

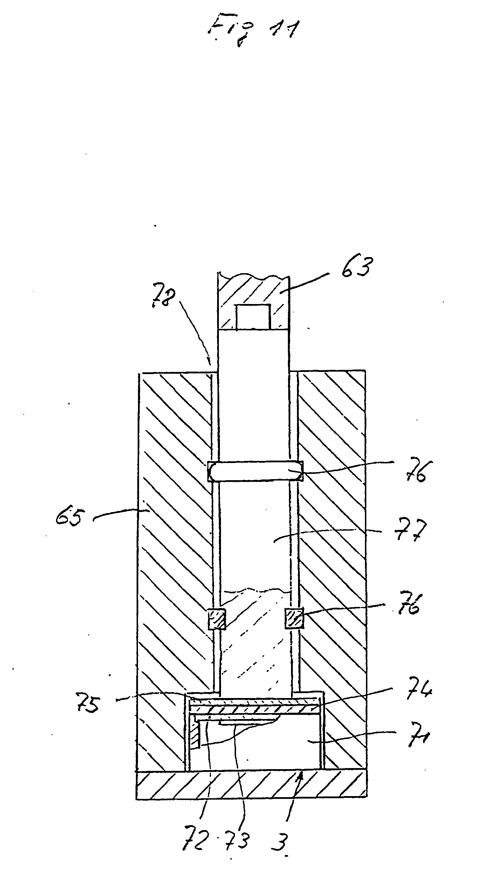

Die Figur 10 zeigt eine Vorrichtung mit einem drehbaren Fadenführungsorgan 61, das in einem bezüglich der Halter 64, 65 feststehenden Lagerteil 62 und in einem beweglichen Lagerteil 63 gelagert ist. Die Lagerteile 62, 63 sind jeweils über einen Halter 64, 65 an einem Träger 66 befestigt, so dass die Achsen der Lagerteile seitlich versetzt zur Achse des Trägers liegen. Die Lagerteile 62, 63 weisen einen Ring 67 mit einem Wälzlager (nicht dargestellt), in welchem das Fadenführungsorgan 61 angeordnet ist. Während der feststehende Lagerteil 62 fest mit dem Halter 64 verbunden ist, enthält der bewegliche Lagerteil 63 eine Druckmesseinrichtung, die in Figur 11 dargestellt ist.

Wie die Figur 11 zeigt, enthält die Druckmesseinrichtung einen Kraftaufnehmer 3 mit einem Gehäuse 71, einer biegeelastischen Platte 72, einem Signalgeber 73 und einer Schicht 74 aus elastischen Material, eine Metallplatte 75, die auf die Schicht 74 aufliegt, zwei Gummiringe 76 und ein zylinderförmiges Organ 77, das an einem Ende mit dem Lagerteil 63 verbunden ist. Im Halter 65 ist eine Bohrung 78 mit einem ersten Abschnitt zur Aufnahme des Kraftaufnehmers 3 und der Metallplatte 75 und mit einem zweiten Abschnitt zur Aufnahme des zylinderförmigen Organs 77 ausgebildet. Im zweiten Abschnitt der Bohrung 78 und im zylinderförmigen Organ 77 sind Nuten ausgebildet, in welche die Gummiringe 76 eingelegt sind. Die Anordnung der Gummiringe 77 in der Bohrung 78 ist so gewählt, dass das mit dem Lagerteil 65 verbundene Organ 77 einerseits durch die Gummiringe 76 im zweiten Abschnitt elastisch gehalten und andererseits über die Metallplatte 75 auf den Kraftaufnehmer 3 abgestützt ist.

Gleich wie bei der Vorrichtung nach Fig. 1 zentrieren die Gummiringe 76 das zylinderförmige Organ 77 innerhalb des zweiten Abschnittes der Bohrung 78 und dichten den Spalt zwischen Bohrung und Organ gegen Faserflug ab. Die Funktion der Gummiringe 76 ist analog wie bei der Vorrichtung nach Fig. 1 und anhand der Fig. 4 erläutert.

Durch die vorstehend erläuterte Anordnung des zylinderförmigen Organs 77, wird eine durch die Kettfäden auf den beweglichen Lagerteil 65 aufgebrachte Kraft in den Kraftaufnehmer 3 eingeleitet, wobei die Metallplatte 75 in vorteilhafter Weise für eine gleichmässige Verteilung der Kraft sorgt.

Nachzutragen ist noch, dass durch die Ringe 67 an den Lagerteilen 62, 63 ein Bereich der Kette festgelegt wird, welcher für die Messung der Kettspannung verwendet wird.

Die Vorrichtung gemäss Figur 12 unterscheidet sich von der Vorrichtung nach Fig. 10 im wesentlichen dadurch, dass ein Fadenführungsorgan 81 in Lagerschalen 82 gelagert ist. Diese Vorrichtung eignet sich insbesondere für die Druckaufnahme an einem Gewebe.

Wie bereits erwähnt, eignen sich die Vorrichtungen für eine direkte Messung an einer Webkette bzw. an einem Gewebe. Um dies zu erreichen, werden die Fadenführungsorganen erfindungsgemäss an einer Umlenkstelle der Kette oder des Gewebes so angeordnet, dass die resultierende Kraftkomponente K im wesentlichen immer lotrecht auf den Kraftaufnehmer gerichtet ist.

Die Figuren 13 und 14 zeigen weitere Ausführungsformen welche nicht Bestandteil der vorliegenden Erfindung sind, wobei in Fig. 13 ein drehfest angeordnetes Fadenführungsorgan 91 und in Fig. 14 ein drehbar angeordnetes Fadenführungsorgan 92 vorgesehen ist.

Wie die Figur 13 zeigt, ist ein Fadenführungsorgan 91 zum Beispiel ein Spannbaum an einer Biegestütze 93 mit einer Ausnehmung 94 zur Aufnahme eines Kraftaufnehmers 3 befestigt. Die Biegestütze 92 ist an einem Träger 95 verstellbar befestigt, um die resultierende Kraftkomponente K einzustellen.

Wie die Figur 14 zeigt, ist ein Fadenführungsorgan 92 zum Beispiel ein Spannbaum auf einer Rollenlageranordnung 96 angeordnet, die schwenkbar an einer Stütze 97 angeordnet ist. Der Kraftaufnehmer 3 ist hierbei auf einer an der Stütze 97 vorgesehenen Schulter 98 so angeordnet, dass die Rollenlageranordnung auf dem Kraftaufnehmer 3 aufliegt. Die Stütze 97 ist zwecks Einstellung der resultierenden Kraftkomponente K verstellbar an einem Träger 99 angeordnet.

Die Vorrichtung enthält eine Kraftmesseinrichtung mit einem Kraftaufnehmer 3 und ein Organ 2, das mit dem Kraftaufnehmer 3 in Wirkverbindung ist, um eine auf das Organ 2 einwirkende Kraft auf den Kraftaufnehmer zu übertragen. Der Kraftaufnehmer 3 ist mit einem elastischen Mittel 10 versehen, um einerseits die Krafteinleitung zu verbessern und andererseits mechanische Schwingungen zu dämpfen.

## Patentansprüche

1. Vorrichtung zur Messung der Kettspannung, mit einer Kraftmesseinrichtung und mit einem Organ (2; 77), welches mit der Kraftmesseinrichtung in Wirkverbindung steht, wobei die Kraftmesseinrichtung mindestens einen Kraftaufnehmer (3) aufweist und ein elastisches Mittel (10, 74) auf dem Kraftaufnehmer spannungsfrei angeordnet ist, **dadurch gekennzeichnet, dass** das Organ (2; 77) einerseits über mindestens ein elastisches Element (9; 76) in einer Ausnehmung (4, 78) gehalten und andererseits auf das elastische Mittel (10; 74) des Kraftaufnehmers abgestützt ist.

2. Vorrichtung nach Anspruch 1, **dadurch gekennzeichnet, dass** das als elastisches Mittel eine Schicht (10) auf den Kraftaufnehmer (3) aufgebracht ist.

3. Vorrichtung nach Anspruch 1, **dadurch gekennzeichnet, dass** das elastische Mittel ein plattenförmiges Organ (74) ist, welches auf den Kraftaufnehmer (3) auflegbar ist.

4. Vorrichtung nach Anspruch 1, **dadurch gekennzeichnet, dass** der Kraftaufnehmer (3) aus einer biegeelastischen Platte (72) und mindestens einem Signalgeber (73) besteht, das mit einer Plattenoberfläche in Verbindung steht.

5. Vorrichtung nach Anspruch 4, **dadurch gekennzeichnet, dass** der Signalgeber (73) ein Dehnungsstreifen oder Piezoquarz ist.

6. Vorrichtung nach Anspruch 1, **dadurch gekennzeichnet, dass** das elastische Mittel (10, 74) aus einem elastomeren Stoff besteht, ausgewählt aus der Gruppe Silikonkautschuk, Nitrilkautschuk, Polyurethan oder dgl. und Mischungen davon.

7. Vorrichtung nach einem der Ansprüche 1 bis 6, **gekennzeichnet durch** eine Metallplatte (75), die auf dem elastischen Mittel (74) angeordnet ist.

8. Vorrichtung nach einem der Ansprüche 1 bis 7, **dadurch gekennzeichnet, dass** das Organ ein Fadenführungsorgan ist und dass das Fadenführungsorgan als länglicher Körper (2) ausgebildet ist, der mindestens an den Längsseiten gehalten ist.

9. Vorrichtung nach einem der Ansprüche 1 bis 7, **dadurch gekennzeichnet, dass** das Organ ein Uebertragungsorgan ist und dass das Uebertragungsorgan als zylinderförmiger Körper (77) ausgebildet ist, der im Umfang gehalten ist.

10. Vorrichtung nach einem der Ansprüche 1 bis 9, **dadurch gekennzeichnet, dass** das elastische Element (9, 76) ein längliches oder ringförmiges Gebilde mit kreisförmigen Querschnitt ist.

11. Vorrichtung nach Anspruch 10, **dadurch gekennzeichnet, dass** das elastische Element (9, 76) aus einem elastomeren Stoff besteht, ausgewählt aus der Gruppe Silikonkautschuk, Nitrilkautschuk, Polyurethan oder dgl. und Mischungen davon.

12. Vorrichtung nach Anspruch 8, **gekennzeichnet durch** ein Fadenführungsorgan (61), das mit dem Uebertragungsorgan (77) verbunden ist.

13. Vorrichtung nach Anspruch 11, **dadurch gekennzeichnet, dass** das Fadenführungsorgan (61; 81) drehfest oder drehbar angeordnet ist.

14. Vorrichtung nach Anspruch 1, **dadurch gekennzeichnet, dass** das Organ eine Biegestütze (93) mit einem Schlitz (94) zur Aufnahme eines Kraftaufnehmers (3) ist, die einerseits mit einem Träger (95) und andererseits mit einem Fadenführungsorgan (91) fest verbunden ist.

15. Vorrichtung nach Anspruch 1, **dadurch gekennzeichnet, dass** das Organ eine Rollenlagereinrichtung (96) ist, die schwenkbar an einem Halter (97) angeordnet ist und mit einem Kraftaufnehmer (3) in Verbindung steht.

16. Webmaschine mit einer Vorrichtung nach einem der Ansprüche 7 bis 15, **dadurch gekennzeichnet, dass** die Vorrichtung auf der Seite des Kettablasses und/oder auf der Seite des Warenabzuges vorgesehen ist und dass die Vorrichtung an einer Umlenkstelle der Kette oder des Gewebes so angeordnet ist, dass die resultierende Kraftkomponente (4) im wesentlichen lotrecht auf den Kraftaufnehmer (3) gerichtet ist.

17. Webmaschine nach Anspruch 16, **dadurch gekennzeichnet, dass** die Webmaschine eine Einphasen-Webmaschine oder eine Mehrphasen-Webmaschine, insbesondere eine Reihenfachwebmaschine ist.

18. Webmaschine nach Anspruch 16 oder 17, **dadurch gekennzeichnet, dass** die Vorrichtung im Verlauf der Webkette im Umlenkbaum (31) oder zwischen Umlenkbaum (36) und Spannbaum (36) angeordnet ist.

19. Webmaschine nach Anspruch 16, **dadurch gekennzeichnet, dass** die Vorrichtung (B) unterhalb des Brustbaumes (28) angeordnet ist.

20. Webmaschine nach Anspruch 16, **dadurch gekennzeichnet, dass** die Vorrichtung (A) am Brustbaum (28) angeordnet ist.

21. Webmaschine nach Anspruch 19 oder 20, **dadurch gekennzeichnet, dass** der Brustbaum aus wenigstens zwei Abschnitten (41, 42) besteht, die im Abstand zueinander auf einer Linie liegend angeordnet sind und dass die Messvorrichtung (A) jeweils zwischen den Brustbaumabschnitten (41, 42) angeordnet ist.

## Claims

1. Device for measuring warp tension, with a force measuring device and with a part (2; 77) actively connected to the force measuring device, wherein the force measuring device has at least one force transducer (3) and an elastic means (10, 74) arranged free from tension on the force transducer, **characterised in that** the part (2; 77) is held in a recess (4, 78) by means of at least one elastic element (9; 76) on one side and is supported on the elastic means (10; 74) of the force transducer on the other side.

2. Device according to claim 1, **characterised in that** a layer (10) is applied as elastic means onto the force transducer (3).

3. Device according to claim 1, **characterised in that** the elastic means is a plate-shaped part (74), which can be placed on the force transducer (3).

4. Device according to claim 1, **characterised in that** the force transducer (3) consists of a flexible plate (72) and at least one signal transmitter (73), which connects to a plate surface.

5. Device according to claim 4, **characterised in that** the signal transmitter (73) is a strain gauge or crystal resonator.

6. Device according to claim 1, **characterised in that** the elastic means (10, 74) is made of an elastomeric material selected from the group comprising silicone rubber, nitrile rubber, polyurethane or the like, and mixtures thereof.

7. Device according to one of claims 1 to 6, **characterised by** a metal plate (75), which is arranged on the elastic means (74).

8. Device according to one of claims 1 to 7, **characterised in that** the part is a thread guide part, and that the thread guide part is configured as an elongated body (2), which is held at least at the longitudinal sides.

9. Device according to one of claims 1 to 7, **characterised in that** the part is a transmission part, and that the transmission part is configured as a cylindrical body (77), which is held at the circumference.

10. Device according to one of claims 1 to 9, **characterised in that** the elastic element (9, 76) is an elongated or ring-shaped body with a circular cross-section.

11. Device according to claim 10, **characterised in that** the elastic element (9, 76) is made from an elastomeric material selected from the group comprising silicone rubber, nitrile rubber, polyurethane or the like, and mixtures thereof.

12. Device according to claim 8, **characterised by** a thread guide part (61), which is connected to the transmission part (77).

13. Device according to claim 11, **characterised in that** the thread guide part (61; 81) is arranged to be fixed against rotation or rotatable.

14. Device according to claim 1, **characterised in that** the part is a bending support (93) with a slot (94) to receive a force transducer (3), which is fixedly connected on one side to a support (95) and on the other side to a thread guide part (91).

15. Device according to claim 1, **characterised in that** the part is a roller bearing means (96), which is arranged to pivot on a holder (97) and connects to a force transducer (3).

16. Loom with a device according to one of claims 7 to 15, **characterised in that** the device is provided on the side of the warp let-off and/or on the side of the fabric take-off, and that the device is arranged at a reversing point of the warp or the woven fabric so that the resulting force component (4) is directed substantially perpendicularly onto the force transducer (3).

17. Loom according to claim 16, **characterised in that** the loom is a single-phase loom or a multi-phase loom, in particular a series shed loom.

18. Loom according to claim 16 or 17, **characterised in that** the device is arranged in the course of the warp in the reversing beam (31) or between the reversing beam (36) and the tension beam (36).

19. Loom according to claim 16, **characterised in that** the device (B) is arranged below the breast beam (28).

20. Loom according to claim 16, **characterised in that** the device (A) is arranged on the breast beam (28).

21. Loom according to claim 19 or 20, **characterised in that** the breast beam consists of at least two sections (41, 42), which are spaced from one another lying on a line, and that the measuring device (A) is arranged between the respective breast beam sections (41,42).

## Revendications

1. Dispositif pour la mesure de tension de chaîne, comprenant un dispositif de mesure de force et un organe (2 ; 77), lequel est en liaison active avec le dispositif de mesure de force, le dispositif de mesure de force présentant au moins un capteur de force (3) et un moyen élastique (10 ; 74) étant disposé sans tension sur le capteur de force, **caractérisé en ce que** l'organe (2 ; 77) est d'une part maintenu au moyen d'au moins un élément (9 ; 76) élastique dans un évidement (4, 78) et est soutenu d'autre part sur le moyen (10 ; 74) élastique du capteur de force.

2. Dispositif selon la revendication 1, **caractérisé en ce qu'**une couche (10) est appliquée sur le capteur de force (3) comme moyen élastique.

3. Dispositif selon la revendication 1, **caractérisé en ce que** le moyen élastique est un organe (74) en forme de plaque qui peut être posé sur le capteur de force (3).

4. Dispositif selon la revendication 1, **caractérisé en ce que** le capteur de force (3) comprend une plaque (72) élastique en flexion et au moins un générateur de signal (73) qui est en liaison avec une surface de plaque.

5. Dispositif selon la revendication 4, **caractérisé en ce que** le générateur de signal (73) est une bande d'allongement ou un quartz piézoélectrique.

6. Dispositif selon la revendication 1, **caractérisé en ce que** le moyen (10 ; 74) élastique est à base d'une matière élastomère, sélectionnée dans le groupe suivant : caoutchouc de silicone, caoutchouc nitrile, polyuréthanne ou similaire et des mélanges de ces produits.

7. Dispositif selon l'une quelconque des revendications 1 à 6, **caractérisé par** une plaque métallique (75) qui est disposée sur le moyen (74) élastique.

8. Dispositif selon l'une quelconque des revendications 1 à 7, **caractérisé en ce que** l'organe est un organe de guidage de fil et **en ce que** l'organe de guidage de fil est conçu sous forme de corps (2) allongé, qui est maintenu au moins sur les cotés longitudinaux.

9. Dispositif selon l'une quelconque des revendications 1 à 7, **caractérisé en ce que** l'organe est un organe de transmission et **en ce que** l'organe de transmission est conçu sous forme de corps (77) de forme cylindrique qui est maintenu à la périphérie.

10. Dispositif selon l'une quelconque des revendications 1 à 9, **caractérisé en ce que** l'élément (9 ; 76) élastique est une structure allongée ou annulaire avec une section circulaire.

11. Dispositif selon la revendication 10, **caractérisé en ce que** l'élément (9 ; 76) élastique est à base d'une matière élastomère, sélectionnée dans le groupe suivant : caoutchouc de silicone, caoutchouc nitrile, polyuréthanne ou similaire et des mélanges de ces produits.

12. Dispositif selon la revendication 8, **caractérisé par** un organe de guidage de fil (61) qui est relié à l'organe de transmission (77).

13. Dispositif selon la revendication 11, **caractérisé en ce que** l'organe de guidage de fil (61 ; 81) est disposé de façon solidaire en rotation ou de façon rotative.

14. Dispositif selon la revendication 1, **caractérisé en ce que** l'organe est un support de flexion (93) avec une fente (94) pour le logement d'un capteur de force (3), qui est relié de façon fixe d'une part à un support (95) et d'autre part à un organe de guidage de fil (91).

15. Dispositif selon la revendication 1, **caractérisé en ce que** l'organe est un dispositif de palier à rouleaux (96), qui est disposé de façon basculante sur un appui (97) et est en liaison avec un capteur de force (3).

16. Machine à tisser dotée d'un dispositif selon l'une quelconque des revendications 7 à 15, **caractérisée en ce que** le dispositif est prévu sur le côté du déroulement de chaîne et/ou sur le côté de l'enroulement du tissu et **en ce que** le dispositif est placé sur un point d'inversion de la chaîne ou du tissu, de sorte que la composante de force (4) résultante est orientée essentiellement perpendiculairement au capteur de force (3).

17. Machine à tisser selon la revendication 16, **caractérisée en ce que** la machine à tisser est une machine à tisser monophase ou une machine à tisser à phases multiples, en particulier une machine à tisser à foules en série.

18. Machine à tisser selon la revendication 16 ou 17, **caractérisée en ce que** le dispositif est placé dans le tracé de la chaîne dans l'ensouple de déviation (31) ou entre l'ensouple de déviation (36) et l'ensouple de serrage (36).

19. Machine à tisser selon la revendication 16, **caractérisée en ce que** le dispositif (B) est placé au-dessus de la poitrinière (28).

20. Machine à tisser selon la revendication 16, **caractérisée en ce que** le dispositif (A) est placé sur la poitrinière (28).

21. Machine à tisser selon la revendication 19 ou 20, **caractérisée en ce que** la poitrinière comprend au moins deux parties (41, 42), lesquelles sont disposées à distance l'une de l'autre sur une ligne et **en ce que** le dispositif de mesure (A) est placé à chaque fois entre les parties de poitrinière (41, 42).
